(19) **Europäisches Patentamt / European Patent Office / Office européen des brevets**

(11) **EP 1 635 414 B1**

(12) **EUROPEAN PATENT SPECIFICATION**

(45) Date of publication and mention of the grant of the patent:
**11.11.2009 Bulletin 2009/46**

(51) Int Cl.:
**H01M 8/04** (2006.01)

(21) Application number: **05019264.0**

(22) Date of filing: **05.09.2005**

(54) **Fuel cell system**

Brennstoffzellensystem

Système de pile à combustible

(84) Designated Contracting States:
**DE FR GB**

(30) Priority: **08.09.2004 JP 2004260950**

(43) Date of publication of application:
**15.03.2006 Bulletin 2006/11**

(73) Proprietor: **NISSAN MOTOR CO., LTD.**
**Yokohama-shi**
**Kanagawa-ken (JP)**

(72) Inventors:
• **Kubo, Norio**
**Kouza-gun**
**Kanagawa-ken (JP)**

• **Shimoi, Ryoichi**
**Yokohama-shi**
**Kanagawa-ken (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
WO-A-03/096460          US-A1- 2003 031 966
US-A1- 2003 134 165

• PATENT ABSTRACTS OF JAPAN vol. 013, no. 490 (E-841), 7 November 1989 (1989-11-07) & JP 01 195671 A (HITACHI LTD), 7 August 1989 (1989-08-07)

## Description

The present invention relates to a fuel cell system according to the preamble of independent claim 1 and method of supplying a fuel gas in a fuel cell system according to the preamble of independent claim 15.

DESCRIPTION OF THE RELATED ART

When the fuel cell is in the process of generation, reaction gases are respectively supplied to a fuel electrode and an oxidant electrode, where the reaction gases are made of a fuel gas such as hydrogen and an oxidant gas such as air. When the fuel cell is stopped, the supplying operation of the reaction gas is stopped. In a certain period after supplying operation of the fuel gas is stopped, the air making a crossover from the oxidant electrode or the air entering the fuel electrode from outside the fuel cell replace the fuel gas in the fuel electrode.

In addition, introducing the fuel gas into the fuel electrode of the fuel cell when starting the fuel cell system exhausts the remaining air in the fuel electrode outside the fuel cell, thereby substituting the fuel gas for the air. In the above substituting process, a possible concurrence of the remaining air with the fuel gas in the fuel electrode may form a local cell in the fuel electrode.

With this, an electrode catalyst of the oxidant electrode may be eroded, leading to an inconvenience of deteriorating fuel cell performance.

Japanese Patent Unexamined Publication No. P2004-139984 discloses a fuel cell system.

A fuel cell system as indicated above and a method of supplying a fuel gas in a fuel cell system as indicated above can be taken from the prior art document US 2003/0134165 A1. In particular, said document teaches a procedure for starting up a fuel cell system that is disconnected from its primary load and has both its cathode and anode flow fields filled with air includes initiating a flow of air through the cathode flow field and rapidly displacing the air in the anode flow field by delivering a flow of fresh hydrogen containing fuel into the anode flow field, and thereafter connecting the primary load across the cell. Sufficiently fast purging of the anode flow field with hydrogen prior to connecting the cells to the load eliminates the need for purging the anode flow field with an inert gas, such as nitrogen, upon start-up.

It is an object of the present invention to provide a fuel cell system as indicated above and a method of supplying a fuel gas in a fuel cell system as indicated above which allows to increase speed of substituting a fuel gas for an oxidant gas remaining in a fuel electrode, suppressing deterioration of cell performance.

According to the present invention said object is solved by a fuel cell system having the features of independent claim 1. Preferred embodiments are laid down in the dependent claims.

Furthermore, according to the present invention said object is also solved by a method of supplying a fuel gas in a fuel cell system having the features of independent claim 15.

Accordingly, there is provided a fuel cell system, comprising: 1) a fuel cell including: i) a fuel electrode to which a fuel gas is supplied, and ii) an oxidant electrode to which an oxidant gas reacting with the fuel gas for a generating operation is supplied; and 2) a fuel gas supplier supplying the fuel gas to the fuel electrode before the fuel cell system is started for the generating operation, a first predetermined pressure Pin1 of the fuel gas being determined based on a product which is calculated from the following: i) an allowable volume Vcell for the fuel gas to flow in the fuel electrode, multiplied by, ii) a pressure Pcell of the fuel gas in the fuel electrode.

Accordingly, there is provided a fuel cell system, comprising: 1) a fuel cell including: i) a fuel electrode to which a fuel gas is supplied, and ii) an oxidant electrode to which an oxidant gas reacting with the fuel gas for a generating operation is supplied; and 2) a fuel gas supplying means for supplying the fuel gas to the fuel electrode before the fuel cell system is started for the generating operation, a first predetermined pressure Pin1 of the fuel gas being determined based on a product which is calculated from the following: i) an allowable volume Vcell for the fuel gas to flow in the fuel electrode, multiplied by, ii) a pressure Pcell of the fuel gas in the fuel electrode.

Accordingly, there is provided a method of supplying a fuel gas in a fuel cell system including a fuel cell including: i) a fuel electrode to which the fuel gas is supplied, and ii) an oxidant electrode to which an oxidant gas reacting with the fuel gas for a generating operation is supplied, the method comprising: supplying the fuel gas to the fuel electrode before the fuel cell system is started for the generating operation, a first predetermined pressure Pin1 of the fuel gas being determined based on a product which is calculated from the following: i) an allowable volume Vcell for the fuel gas to flow in the fuel electrode, multiplied by, ii) a pressure Pcell of the fuel gas in the fuel electrode.

Hereinafter, the present invention is illustrated and explained by means of preferred embodiments in conjunction with the accompanying drawings. In the drawings wherein:

Fig. 1 shows a structure of a fuel cell system according to a first embodiment of the present invention.
Fig. 2 shows a flow chart of procedures for implementing a substituting process of the first embodiment.
Fig. 3 shows a structure of a fuel cell system according to a second embodiment of the present invention.
Fig. 4 shows a flow chart of procedures for implementing a substituting process of the second embodiment.

Fig. 5 shows a structure of a fuel cell system according to a third embodiment of the present invention.
Fig. 6 shows a flow chart of procedures for implementing a substituting process of the third embodiment.
Fig. 7 shows a structure of a fuel cell system according to a fourth embodiment of the present invention.

[First embodiment]

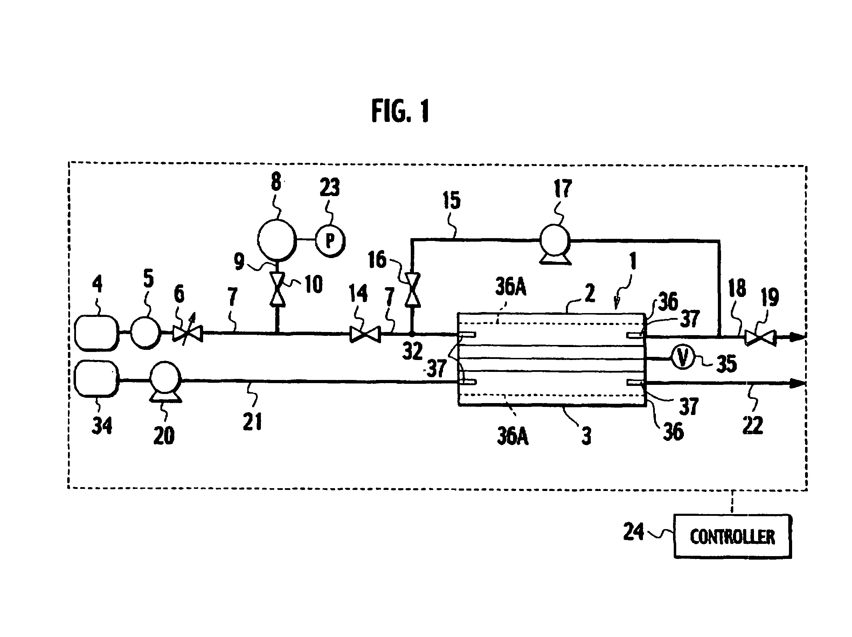

Fig. 1 shows a structure of a fuel cell system, according to a first embodiment of the present invention. The fuel cell system in Fig. 1 according to the first embodiment is provided with: i) a fuel cell stack 1 which is a plurality of stacked single cells, each having a structure where a fuel electrode 2 and an oxidant electrode 3 interposing therebetween a solid polymer membrane (not shown) are sandwiched between separators 36, ii) a fuel gas system supplying and exhausting fuel gas such as hydrogen to and from the fuel cell stack 1, and iii) an oxidant gas system supplying and exhausting oxidant gas such as air to and from the fuel cell stack 1.

The fuel gas system has a fuel gas supplying pipe 7 connecting to the fuel cell stack 1 a high pressure fuel tank 4 which reserves therein the fuel gas. The fuel gas supplying pipe 7 is provided with a fuel gas pressure adjusting valve 5 adjusting supply pressure of the fuel gas, a fuel gas supply quantity adjusting valve 6 adjusting supply quantity of the fuel gas, and a fuel gas supplying valve 14 controllably supplying the fuel gas to the fuel cell stack 1, which are disposed in the above order from upstream side.

A fuel gas branched portion pipe 9 is connected to the fuel gas supplying pipe 7 which is disposed between the fuel gas supply quantity adjusting valve 6 and the fuel gas supplying valve 14. The fuel gas branched portion pipe 9 has the other end provided with a fuel gas Storing portion 8. The fuel gas storing portion 8 is provided with a fuel gas pressure sensor 23 measuring pressure of the fuel gas stored in the fuel gas storing portion 8. The fuel gas branched portion pipe 9 is provided with a fuel gas branched portion opening-dosing valve 10 controllably shutting off the fuel gas branched portion pipe 9. The fuel gas pressure sensor 23 may be any sensor that is capable of sensing pressure of a space which is sealed with the fuel gas supply quantity adjusting valve 6 and the fuel gas supplying valve 14.

There is provided a fuel gas exhausting valve 19 on a fuel gas exhausting pipe 18 which is connected to the fuel cell stack 1's fuel gas outlet side. In addition, there is provided a fuel gas circulating pipe 15 linking the fuel gas supplying pipe 7 (between the fuel gas supplying valve 14 and the fuel cell stack 1's fuel gas inlet side) with the fuel gas exhausting pipe 18 (between the fuel cell stack 1's fuel gas outlet side and the fuel gas exhausting valve 19). The fuel gas circulating pipe 15 is provided, for example, with a fuel gas circulating pump 17 which is a compressor. In addition, there is provided a fuel gas circulating portion opening-closing valve 16 between the fuel gas circulating pump 17 and a link point 32 which links the fuel gas supplying pipe 7 with the fuel gas circulating pipe 15. The fuel gas circulating portion opening-closing valve 16 is preferably to be disposed as close as possible to the link point 32 between the fuel gas supplying pipe 7 and the fuel gas circulating pipe 15, for conveying the fuel gas pressure to the fuel electrode 2 by suppressing escape of the fuel gas pressure to the fuel gas circulating pipe 15. Otherwise, the fuel gas circulating portion opening-closing valve 16 and the supplying valve 14 may structure a 3-direction valve on the link point 32 which links the fuel gas supplying pipe 7 with the fuel gas circulating pipe 15.

On the other hand, in the oxidant gas system, an oxidant gas supplying pipe 21 supplying oxidant gas to the oxidant electrode 3 of the fuel cell stack 1 is connected to the fuel cell stack 1's oxidant gas inlet side. The oxidant gas supplying pipe 21 is provided with an oxidant gas pump 20 compressing an oxidant gas to be supplied to the fuel cell stack 1. In addition, to the fuel cell stack 1's oxidant gas outlet side, an oxidant gas exhausting pipe 22 is connected which leads the oxidant gas from the fuel cell stack 1 to outside the fuel cell stack 1. The oxidant gas in the air or reserved in an oxidant gas tank 34 is supplied to the oxidant electrode 3 through the oxidant gas supplying pipe 21.

In addition, the fuel cell stack 1 is provided with a controller 24. The controller 24 functions as a control center controlling operation of the fuel cell system. The controller 24 is, for example, a microcomputer provided with sources such as CPU, memory device, and input/output device which are necessary for a computer controlling various operating processes based on program. The controller 24 reads in signals from various sensors (not shown) including the fuel gas pressure sensor 23 of the fuel cell system. Then, based on the thus read-in various signals and on a control logic (program) retained in advance internally, the controller 24 sends instructions to various structural elements (including various valves and various pumps) of the fuel cell system, to thereby administratively control all operations (including substituting process of substituting fuel gas for oxidant gas) that are necessary for operating and stopping the system.

With the fuel cell system having the above structure, an ordinary operation at first supplies the fuel gas from the high pressure fuel tank 4 to the fuel electrode 2 via the fuel gas pressure adjusting valve 5, the fuel gas supply quantity adjusting valve 6 and the fuel gas supplying valve 14 through the fuel gas supplying pipe 7. An unused fuel gas exhausted from the fuel cell stack 1 is exhausted from the fuel gas exhausting pipe 18 when the fuel gas exhausting valve 19 is open. On the other hand, when the fuel gas exhausting valve 19 is closed, the fuel gas circulating portion opening-closing valve 16 is opened and the fuel gas circulating pump 17 is operated, to thereby supply the unused fuel gas again to the fuel electrode 2 via the fuel gas circulating pipe 15.

On the other hand, operating the oxidant gas pump 20 can supply the oxidant gas to the oxidant electrode 3 of the fuel cell stack 1 through the oxidant gas supplying pipe 21, and exhaust through the oxidant gas exhausting pipe 22 an unused oxidant gas exhausted from the fuel cell stack 1.

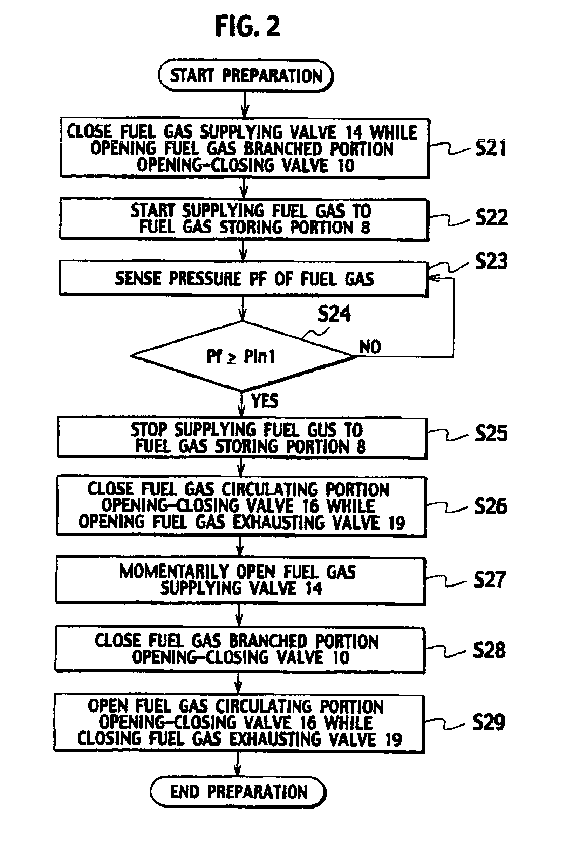

As described above, before the ordinary operation of the fuel cell system, a substituting process of substituting the fuel gas for the oxidant gas remaining in the fuel electrode 2 is implemented, which is a system starting preparation. The substituting process is implemented according procedures in flow chart in Fig. 2.

(Step S21)

With the system starting preparation started in Fig. 2, a routine at first closes the fuel gas supplying valve 14 while opening the fuel gas branched portion opening-closing valve 10.

Then, the routine distributes the fuel gas to the fuel gas branched portion pipe 9 via the fuel gas pressure adjusting valve 5 (so adjusting the fuel gas pressure of the high pressure fuel tank 4 to a predetermined pressure) and the fuel gas supply quantity adjusting valve 6 (so adjusting the fuel gas supply quantity to a predetermined supply quantity).

(Step S22)

The fuel gas distributed to the fuel gas branched portion pipe 9 is supplied to the fuel gas storing portion 8 via the fuel gas branched portion opening-closing valve 10, to be stored in the fuel gas storing portion 8.

The above predetermined pressure of the fuel gas is, for example, less than or equal to a resistant pressure of the fuel cell. The above predetermined supply quantity of the fuel cell can be arbitrarily set according to the fuel cell system.

(Step S23)

Then, the fuel gas pressure sensor 23 senses a pressure Pf of the fuel gas stored in the fuel gas storing portion 8, to thereby give the thus sensed fuel gas pressure Pf to the controller 24.

(Step S24)

The controller 24 determines whether or not the thus stored fuel gas pressure Pf reaches more than or equal to a first predetermined pressure Pin1.

Herein, the first predetermined pressure Pin1 of the fuel gas is calculated based on an allowable volume Vcell for the fuel gas to flow in the fuel electrode 2, a pressure Pcell of the fuel gas in the fuel electrode 2, and a volume Vin of the fuel gas supplying pipe 7.

Vcell is, for example, a volume of a flow channel 36A formed in the separator 36, added by a volume inside a manifold 37. Moreover, Vcell preferably includes a volume of a pipe portion which is surrounded by the fuel electrode 2's inlet, the fuel gas supplying valve 14, and the fuel gas circulating portion opening-closing valve 16 (furthermore, including a part of the fuel gas supplying pipe 7 and a part of the fuel gas branched portion pipe 9).

Pcell is an initial pressure of the pipe portion which is surrounded by the fuel electrode 2's inlet, the fuel gas supplying valve 14 and the fuel gas circulating portion opening-closing valve 16 (furthermore, including a part of the fuel gas supplying pipe 7 and a part of the fuel gas branched portion pipe 9). When a back pressure on downstream side of the fuel gas exhausting valve 19 is 0 at gauge pressure, Pcell is substantially equal to an atmospheric pressure.

Vin is the space sealed with the fuel gas supply quantity adjusting valve 6 and the fuel gas supplying valve 14.

Pin1, Vin, Pcell and Vcell at least satisfy the following formula 1:

$$\text{Formula 1:} \qquad Pin1 \times Vin > Pcell \times Vcell$$

(Step S25)

When YES at step S24 with the fuel gas pressure Pf reaching more than or equal to the first predetermined pressure Pin1, the routine seals the supply quantity adjusting valve 6. to thereby stop supplying the fuel gas to the fuel gas storing portion 8.

(Step S26)

Then, the routine closes the fuel gas circulating portion opening-closing valve 16 while opening the fuel gas exhausting valve 19.

(Step S27)

Then, the routine momentarily opens the fuel gas supplying valve 14. With this, the fuel gas supplied to the fuel electrode 2 of the fuel cell stack 1 is more than a product (volume × pressure) of the allowable volume Vcell multiplied by the pressure Pcell. As a result, the oxidant gas remaining in the fuel electrode 2 is pushed out from the fuel electrode 2 of the fuel cell stack 1 to the fuel gas exhausting pipe 18, to be exhausted outside the fuel cell stack 1 via the fuel gas exhausting valve 19, thus substituting the supplied fuel gas for the oxidant gas remaining in the fuel electrode 2.

Herein, modifying the formula 1 to the following formula 1' can more accurately implement the gas substitution in the fuel electrode 2 by scavenging the supplied hydrogen, and minimize unnecessary hydrogen to the system:

$$\text{Formula 1':} \qquad (Pin1 - Pcell) \times Vin > Pcell \times Vcell$$

(Step S28)

Then, when the fuel gas pressure sensed with the fuel gas pressure sensor 23 reaches less than or equal to a second predetermined pressure Pin2, the routine closes the fuel gas branched portion opening-closing valve 10.

(Step S29)

Then, the routine opens the fuel gas circulating portion opening-closing valve 16 while closing the fuel gas exhausting valve 19.

Herein, the second predetermined pressure Pin2 for closing the fuel gas branched portion opening-closing valve 10 and the fuel gas exhausting valve 19 is set to a value at least satisfying the following formula 2.

$$\text{Formula 2:} \qquad (Pin1 - Pin2) \times Vin > Pcell \times Vcell$$

Implementing the above process procedures, the routine substitutes the fuel gas for the oxidant gas remaining in the fuel electrode 2, to thereby end the system starting preparation.

Even in the case that the fuel gas pressure sensed with the fuel gas pressure sensor 23 comes close to the atmospheric pressure, repeating the above operations is allowed until the single cell's voltage reaches more than or equal to a predetermined voltage measured with a voltmeter 35 (voltage sensor) disposed at the single cell of the fuel cell stack 1.

In addition, the above repeated operations may be necessary due to some errors which are to be subjected to a failure diagnosis and be reported to an operator.

Summarizing the above, the structure of the fuel cell system according to the first embodiment brings about the following:

In the starting of the fuel cell system, supplying the fuel gas that is more than the product (the allowable volume Vcell for the fuel gas to flow in the fuel electrode 2, multiplied by the pressure Pcell of the fuel gas in the fuel electrode 2) can make shorter; compared with the related art, the time for the oxidant gas to remain in the fuel electrode 2 in combination with the fuel gas. With this, the cell performance deterioration which may be involved in the local cell formation described in the above DESCRIPTION OF THE RELATED ART can be suppressed to a great extent.

In the starting of the fuel cell system, momentarily opening the fuel gas supplying valve 14 of the fuel gas with increased pressure while keeping the fuel gas exhausting valve 19 of the fuel electrode 2 opened can supply the fuel gas to the fuel electrode 2 making the best use of pressure difference, thus rapidly substituting the fuel gas for the oxidant gas remaining in the fuel electrode 2.

In addition, closing the fuel gas exhausting valve 19 when the fuel gas pressure sensed with the fuel gas pressure sensor 23 reaches the second predetermined pressure Pin2 can substantially minimize the substitution time, thereby decreasing quantity of the exhausted fuel gas, decreasing fuel consumption and making the exhausted fuel processing easier. As a result, a highly reliable fuel cell system can be obtained that has low cell performance deterioration in the starting of the system.

Closing the fuel gas branched portion opening-closing valve 10 in the ordinary operation of the fuel cell system can decrease wasteful capacity of the fuel gas supply system, thereby improving transient response of the fuel gas pressure and transient response of the fuel gas supply quantity in the ordinary operation. In addition, temporarily stopping the fuel gas supply from the high pressure fuel tank 4 when opening the fuel gas supplying valve 14 allows the fuel gas pressure sensor 23 to stably measure the fuel gas pressure.

According to the first embodiment, alternatively, using the fuel gas supply quantity in place of the fuel gas pressure is allowed for supplying the fuel gas to the fuel electrode 2 in the substituting process. In this case, the pressure of the space which is sealed with the fuel gas supply quantity adjusting valve 6 and the fuel gas supplying valve 14 is to be calculated from i) the supply quantity of the fuel gas supplied to the space via the fuel gas supply adjusting valve 6 and from ii) the space's volume.

Not limited to when starting of the fuel cell system, the substituting process of substituting the fuel gas for the oxidant gas may be implemented after once stopping the fuel gas supply to the fuel cell stack 1 in the system operation, for example, may be implemented after idle stop. Storing the fuel gas in the fuel gas Storing portion 8 may be implemented in the process of generating the fuel cell stack 1. The fuel gas branched portion opening-closing valve 10 can be omitted.

In place of when the fuel gas pressure sensed with the fuel gas pressure sensor 23 reaches less than or equal to the second predetermined pressure Pin2 (see step S28 and step 29), the timing for closing the fuel gas exhausting valve 19 may be when the supply quantity of the fuel gas supplied from the fuel gas storing portion 8 reaches less than or equal to the predetermined supply quantity (for example, when the fuel gas stops flowing). Otherwise, the controlling operation may be implemented in a period when the fuel gas supply quantity is less than or equal to the predetermined supply quantity. Otherwise, the timing for closing the fuel gas exhausting valve 19 may be set based on the fuel cell stack 1's cell voltage measured with the voltmeter 35 (voltage sensor) disposed at the single cell. Specifically, the fuel gas exhausing valve 19 is so set as to close when the fuel cell stack 1's cell voltage reaches more than or equal to a predetermined voltage, preferably for example, 0.8 V. The method of setting the timing for closing the fuel gas exhausting valve 19 based on the fuel gas supply quantity or the single cell voltage is applicable to a second embodiment, a third embodiment and a fourth embodiment described below.

[Second embodiment)

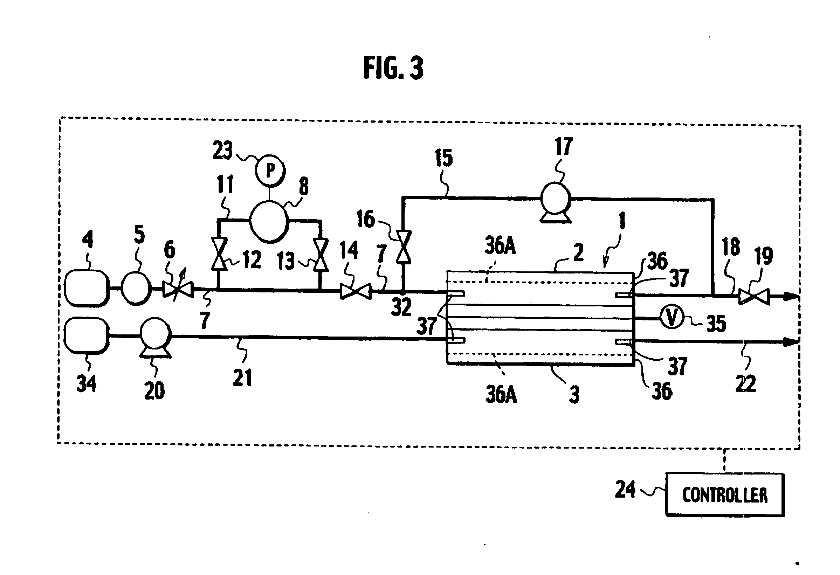

Fig. 3 shows a structure of the fuel cell system, according to the second embodiment of the present invention. The fuel cell system in Fig. 3 according to the second embodiment is substantially similar to that according to the first embodiment in Fig. 1, except that the fuel gas branched portion pipe 9, the fuel gas branched portion opening-closing valve 10 are replaced with a fuel gas bypass portion pipe 11, two fuel gas bypass portion opening-closing valves 12, 13.

To the fuel gas supplying pipe 7 between the fuel gas supply quantity adjusting valve 6 and the fuel gas supplying valve 14, the fuel gas bypass portion pipe 11 is so connected as to bypass the fuel gas supplying pipe 7. The fuel gas bypass portion pipe 11 is provided with the fuel gas storing portion 8 having the fuel gas pressure sensor 23 like that in Fig. 1 according to the first embodiment. In addition, the fuel gas bypass portion pipes 11 on upstream side and on downstream side of the fuel gas storing portion 8 are respectively provided with the two fuel gas bypass portion opening-closing valves 12, 13.

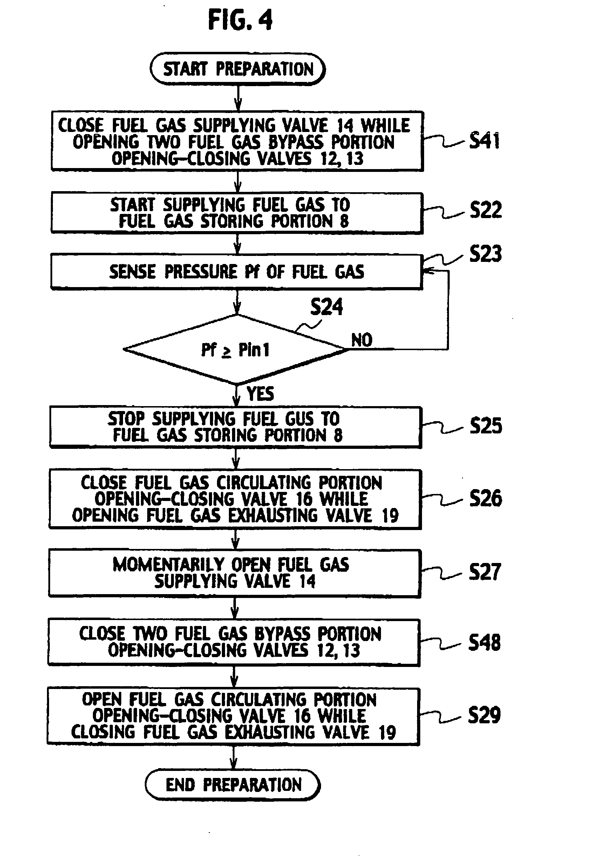

With the above structure according to the second embodiment, the substituting processes like those according to the first embodiment are to be implemented according to procedures shown by the flow chart in Fig. 4. Hereinafter in Fig. 4, the operations (Step S22 to step S27, and step S29) like those in Fig. 2 are denoted by the same numerals.

(Step S41)

With the system starting preparation started in Fig. 4, the routine at first closes the fuel gas supplying valve 14 while opening The two fuel gas bypass portion opening-closing valves 12, 13. Then, the routine implements processes in step S22 to step S27, like those according to the first embodiment.

(Step S48)

Then, the routine closes the two fuel gas bypass portion opening-closing valves 12, 13 when the fuel gas pressure sensed with the fuel gas pressure sensor 23 reaches less than or equal to the second predetermined pressure Pin2.

(Step S29)

Then, the routine opens the fuel gas circulating portion opening-closing valve 16 while closing the fuel gas exhausting valve 19.

Implementing the above process procedures, the routine substitutes the fuel gas for the oxidant gas remaining in the fuel electrode 2, to thereby end the system starting preparation.

As described above, the effect brought about according to the first embodiment can also be brought about according to the second embodiment. In addition, closing both of the two fuel gas bypass portion opening-closing valves 12, 13 in the ordinary operation of the fuel cell system can decrease the wasteful capacity of the fuel gas supply system, thereby improving the transient response of the fuel gas pressure and the transient response of the fuel gas supply quantity in the ordinary operation.

[Third embodiment]

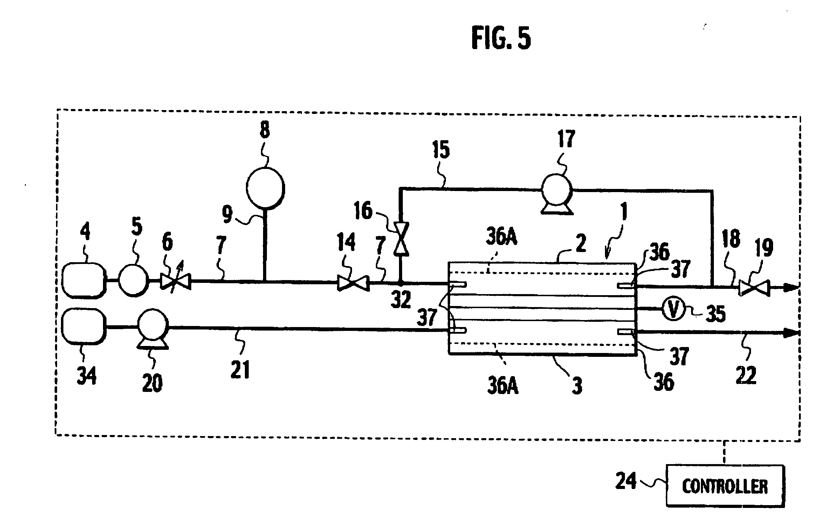

Fig. 5 shows a structure of the fuel cell system, according to the third embodiment of the present invention. The fuel cell system in Fig. 5 according to the third embodiment is substantially similar to that according to the first embodiment in Fig. 1, except that the fuel gas branched portion opening-closing valve 10 and the fuel gas pressure sensor 23 are deleted.

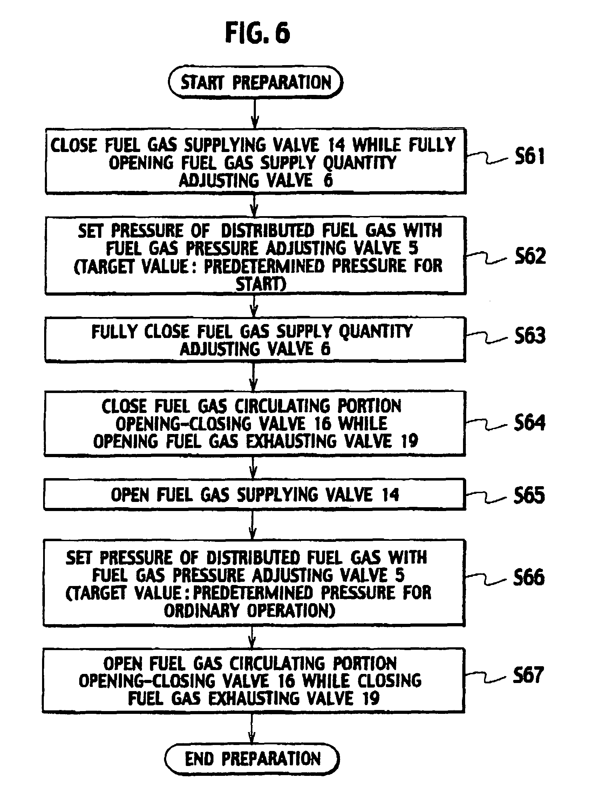

With the above structure according to the third embodiment, the substituting processes like those according to the first embodiment are to be implemented according to procedures shown by the flow chart in Fig. 6.

(Step S61)

With the system starting preparation started in Fig. 6, the routine at first closes the fuel gas supplying valve 14 while fully opening the fuel gas supply quantity adjusting valve 6.

(Step S62)

Then, with a pressure adjustment target value of the fuel gas pressure adjusting valve 5 set to a predetermined pressure that is proper for the starting, the routine controllably adjusts the pressure of the distributed fuel gas.

With this, from the high pressure fuel tank 4 to the fuel gas storing portion 8, the routine supplies the fuel gas with its pressure adjusted to the predetermined pressure by means of the fuel gas pressure adjusting valve 5, to thereby store the thus supplied fuel gas in the fuel gas Storing portion 8.

(Step S63)

After an elapse of a predetermined time with the fuel gas pressure thus adjusted, the routine fully closes the fuel gas supply quantity adjusting valve 6, to thereby stop storing the fuel gas in the fuel gas storing portion 8.

The above predetermined pressure is, for example, more than or equal to the first predetermined pressure Pin1 of the space which is sealed with the fuel gas supply quantity adjusting valve 6 and the fuel gas supplying valve 14.

(Step S64)

Then, the routine closes the fuel gas circulating portion opening-closing valve 16 while opening the fuel gas exhausting valve 19.

(Step S65)

Then, the routine opens the fuel gas supplying valve 14. With this, like the first embodiment, the fuel gas is supplied to the fuel electrode 2 of the fuel cell stack 1. Then, from the fuel electrode 2 of the fuel cell stack 1 to the fuel gas exhausting pipe 18, the oxidant gas remaining in the fuel electrode 2 is pushed out. Then, the routine exhausts the oxidant gas outside the fuel cell stack 1 via the fuel gas exhausting valve 19, thus substituting the supplied fuel gas for the oxidant gas remaining in the fuel electrode 2.

(Step S66)

Then, the routine sets the pressure adjustment target value of the fuel gas pressure adjusting valve 5 to a predetermined pressure that is proper for the ordinary operation.

(Step S67)

Then, the routine opens the fuel gas circulating portion opening-closing valve 16 while closing the fuel gas exhausting valve 19.

Implementing the above process procedures, the routine substitutes the fuel gas for the oxidant gas remaining in the fuel electrode 2, to thereby end the system starting preparation.

As described above, the effect brought about according to the first embodiment can also be brought about according to the third embodiment. In addition, with the absence from the fuel gas pressure sensor 23 sensing the pressure of the fuel gas stored in the fuel gas storing portion 8 and absence from a fuel gas supply quandry meter, the structure according to the third embodiment having the minimum requirement for the operation can store the fuel gas of the pressure necessary for the substituting process, thus bringing about the above effect without enlarging the fuel cell system.

[Fourth embodiment]

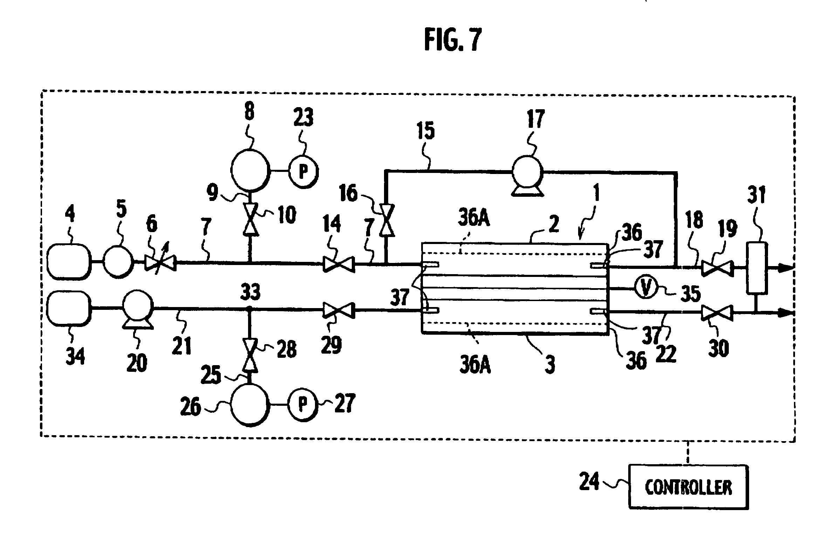

Fig. 7 shows a structure of the fuel cell system, according to the fourth embodiment of the present invention. The fuel cell system in Fig. 7 according to the fourth embodiment has a structure in which the oxidant gas system is provided with functional elements substantially equivalent to the fuel gas branched portion pipe 9, the fuel gas branched portion opening-closing valve 10, the fuel gas storing portion 8, the fuel gas pressure sensor 23, the fuel gas supplying valve 11 and the fuel gas exhausting valve 19 in Fig. 1 according to the first embodiment.

Specifically, an oxidant gas branched portion pipe 25 is connected to the oxidant gas supplying pipe 21 between the oxidant gas pump 20 and the fuel cell stack 1's oxidant gas inlet, the other end of the oxidant gas branched portion pipe 25 is provided with an oxidant gas storing portion 26, and the oxidant gas storing portion 26 is provided with an oxidant gas pressure sensor 27 measuring a pressure Po of the oxidant gas stored in the oxidant gas storing portion 26. The oxidant gas branched portion pipe 25 is provided with an oxidant gas branched portion opening-closing valve 28 controllably shutting off the oxidant gas branched portion pipe 25. Between a link point 33 (linking the oxidant gas supplying pipe 21 with the oxidant gas branched portion pipe 25) and the fuel cell stack 1's oxidant gas inlet side, the oxidant gas supplying pipe 21 is provided with an oxidant gas supplying valve 29.

In addition, the oxidant gas exhausting pipe 22 connected to the fuel cell stack 1's oxidant gas outlet side is provided with an oxidant gas exhausting valve 30 adjusting the pressure of the oxidant gas supplied to the fuel cell stack 1 in the ordinary operation. In addition, the fuel gas exhausting pipe 18 on downstream side of the fuel gas exhausting valve 19 is provided with a fuel processor 31 decreasing concentration of the fuel gas exhausted from the fuel cell stack 1. The fuel processor 31 includes, for example, a fuel diluting device diluting the fuel gas. Herein, the fuel processor 31 may be used for the first embodiment, the second embodiment and the third embodiment.

With the above structure according to the fourth embodiment, the substituting processes are to be implemented, like those according to the first embodiment. In addition, according to the fourth embodiment, in parallel with the substituting processes, the oxidant gas is supplied to the oxidant electrode 3 of the fuel cell stack 1.

Specifically, in parallel with the storing operation of the fuel gas in the fuel gas storing portion 8, the routine operates the oxidant gas pump 20 and stores the oxidant gas in the oxidant gas storing portion 26 via the oxidant gas branched portion opening-closing valve 28, until the pressure Po of the oxidant gas stored in the oxidant gas storing portion 26 becomes a third predetermined pressure Pin3 which is substantially equal to the pressure Pf of the fuel gas stored in the fuel gas storing portion 8 (i.e., causing an allowable differential pressure for supplying to the fuel cell stack 1). Herein, when the fuel gas having the predetermined supply quantity is stored in the fuel gas storing portion 8, the routine stores the oxidant gas in the oxidant gas storing portion 26 until the oxidant gas has a predetermined supply quantity substantially equal to the predetermined supply quantity of the fuel gas stored in the fuel gas storing portion 8. When the oxidant gas having the above allowable differential pressure is stored in the oxidant gas storing portion 26, the routine stops the oxidant gas pump 20, to thereby stop the storing operation.

Then, substantially simultaneously with opening of the fuel gas supplying valve 14, the routine opens the oxidant gas supplying valve 29, to thereby supply the oxidant gas stored in the oxidant gas storing portion 26 to the oxidant electrode 3 of the fuel cell stack 1. With this, the routine increases the pressure of the oxidant electrode 3 side, and suppresses increase in differential pressure between the fuel electrode 2 and the oxidant electrode 3 which differential pressure may be caused by supplying the high-pressure fuel gas to the fuel electrode 2. In addition, the fuel gas exhausted by the substituting process from the fuel electrode 2 is consumed by the fuel processor 31 and exhausted therefrom.

Then, substantially simultaneously with closing of the fuel gas exhausting valve 19, the routine so sets that the oxidant gas having a supply quantity preset by the oxidant gas pump 20 is supplied to the oxidant electrode 3 of the fuel cell stack 1. Herein, the oxidant gas supply quantity is preferably set such that the fuel gas concentration in the fuel processor 31 is less than or equal to 4%.

As described above, according to the fourth embodiment, supplying the oxidant to the oxidant electrode 3 can suppress damage to and deterioration of the cell's electrolyte membrane which may be caused by increase in the differential pressure between the fuel electrode 2 and the oxidant electrode 3. Setting the fuel processor 31 to the fuel gas exhausting pipe 18 can increase the supply quantity of the fuel gas to the fuel electrode 2 in the substituting process, thereby more increasing the effects than the first embodiment to the third embodiment.

The fuel processor 31 being the fuel diluting device can comparatively simplify the fuel cell system. Setting the supply quantity of the oxidant supplied to the oxidant electrode 3 such that the fuel gas concentration of the fuel processor 31 is less than or equal to the predetermined concentration (4%) can assuredly process the unused fuel gas, increasing reliability of the fuel cell system.

Alternatively, as a first modification to the fourth embodiment, the oxidant gas branched portion pipe 25 and the oxidant gas branched portion opening-closing valve 28 may be replaced with an oxidant gas bypass portion pipe and two oxidant gas bypass portion opening-closing valves, like the first embodiment modified to the second embodiment by replacing the fuel gas branched portion pipe 9 and the fuel gas branched portion opening-closing valve 10 with the fuel gas bypass portion pipe 11 and the two fuel gas bypass portion opening-closing valves 12, 13. In addition, as a second modification to the fourth embodiment, the oxidant gas pressure sensor 27 and the oxidant gas branched portion opening-closing valve 28 can be deleted, like the first embodiment modified to the third embodiment by deleting the fuel gas branched portion opening-closing valve 10 and the fuel gas pressure sensor 23.

In addition, the second embodiment and the third embodiment can have the oxidant gas system structure according to the fourth embodiment, or can have the oxidant gas system structure according to the first and second modifications to the fourth embodiment.

## Claims

1. A fuel cell system, comprising:

   a fuel cell (1) including a fuel electrode (2) to which a fuel gas is supplied, and an oxidant electrode (3) to which an oxidant gas reacting with the fuel gas for a generating operation is supplied;
   a fuel gas supplier (7, 8, 14) for supplying the fuel gas to the fuel electrode (2); and a controller (24), **characterized in that**
   the controller (24) is adapted to calculate a first pressure Pin1 of the fuel gas and to control the fuel gas supplier to supply an amount of fuel gas at a pressure equal to or higher than the calculated first pressure Pin1 before the fuel cell system is started for the generating operation, wherein the first pressure Pin1 is calculated by multiplying an allowable volume Vcell by a second pressure Pcell of the fuel gas in the fuel electrode (2), according to the following formula:

$$\text{Formula 1: } Pin1 \times Vin > Pcell \times Vcell,$$

   wherein Vin is a predetermined volume,
   the allowable volume Vcell is an addition of at least the following volumes:

   a volume of a flow channel (36A) formed in a separator (36) in the fuel cell (1) and a volume inside a fuel manifold (37) connected to the fuel cell (1).

2. A fuel cell system according to claim 1, **characterized in that** the predetermined volume Vin equals the volume of a space between a fuel gas supply quantity adjusting valve (6) and a fuel gas supplying valve (14).

3. A fuel cell system according to claim 1 or 2, **characterized in that** the allowable volume Vcell is further added by a volume of a pipe portion which is surrounded by an inlet of the fuel electrode (2), the fuel gas supplying valve (14) of the fuel gas supplier (7, 8, 14), and a fuel gas circulating portion opening-closing valve (16).

4. A fuel cell system according to claim 3, **characterized in that** the fuel gas supplier (7, 8, 14) includes:

   the fuel gas supplying pipe (7) supplying to the fuel electrode (2) the fuel gas from a fuel gas reservoir (4) which reserves therein the fuel gas,
   the fuel gas supplying valve (14) disposed at the fuel gas supplying pipe (7), and controllably supplying and shutting off the fuel gas distributed through the fuel gas supplying pipe (7) to the fuel electrode (2), and
   a fuel gas storing portion (8) linking to the fuel gas supplying pipe (7) on an upstream side relative to the fuel gas supplying valve (14), and being capable of storing the fuel gas led out of the fuel gas reservoir (4) until the thus led fuel gas has the first predetermined pressure Pin1, and
   wherein the controller (24) is adapted to implement the following sequential operations before the fuel cell system is started for the generating operation:

storing (S22, S62) in the fuel gas storing portion (8) the fuel gas having the first predetermined pressure Pin1,

opening (S27, S65) the fuel gas supplying valve (14), and

supplying to the fuel electrode (2) the fuel gas stored in the fuel gas storing portion (8).

5. A fuel cell system according to claim 4, **characterized by** a fuel gas exhausting pipe (18) leading out and exhausting the fuel gas which is unused and exhausted from the fuel electrode (2), and

a fuel gas exhausting valve (19) disposed at the fuel gas exhausting pipe (18), and controllably exhausting and shutting off the fuel gas distributed through the fuel gas exhausting pipe (18), wherein the controller (24) is adapted to implement the following sequential operations:

opening (S26, S64) the fuel gas exhausting valve (19),

the opening (S27, S65) of the fuel gas supplying valve (14),

the supplying of the fuel gas to the fuel electrode (2), and

closing (S29, S67) the fuel gas exhausting valve (19) when a pressure (Pf) of the fuel gas stored in the fuel gas storing portion (8) is decreased to less than or equal to a second predetermined pressure Pin2.

6. A fuel cell system according to claim 5, **characterized in that** the second predetermined pressure Pin2 for closing the fuel gas exhausting valve (19) is set to a value at least satisfying the following formula 2:

$$\text{Formula 2: } (Pin1 - Pin2) \times Vin > Pcell \times Vcell$$

7. A fuel cell system according to claim 4 or 5, **characterized by** an oxidant gas supplier (21, 26, 29) supplying the oxidant gas into the oxidant electrode (3) before the fuel cell system is started for the generating operation, the oxidant gas supplier (21, 26, 29) including:

an oxidant gas supplying pipe (21) supplying to the oxidant electrode (3) the oxidant gas,

an oxidant gas supplying valve (29) disposed at the oxidant gas supplying pipe (21), and controllably supplying and shutting off the oxidant gas distributed through the oxidant gas supplying pipe (21) to the oxidant electrode (3), and

an oxidant gas storing portion (26) linking to the oxidant gas supplying pipe (21) on an upstream side relative to the oxidant gas supplying valve (29), and being capable of storing the oxidant gas until the oxidant gas has a third predetermined pressure (Pin3) being substantially equal to a pressure (Pf) of the fuel gas stored in the fuel gas storing portion (8), wherein the controller (24) is adapted to implement the following sequential operations:

storing in the fuel gas storing portion (8) the fuel gas having the first predetermined pressure (Pin1),

opening the fuel gas supplying valve (14) and the oxidant gas supplying valve (29) substantially simultaneously, when the pressure (Pf) of the fuel gas stored in the fuel gas storing portion (8) and a pressure (Po) of the oxidant gas stored in the oxidant gas storing portion (26) cause a differential pressure less than or equal to a predetermined differential pressure, and

supplying the fuel gas to the fuel electrode (2) while supplying the oxidant gas to the oxidant electrode (3).

8. A fuel cell system according to claim 4 or 7, **characterized by** a fuel gas exhausting pipe (18) leading out and exhausting the fuel gas which is unused and exhausted from the fuel electrode (2),

a fuel gas exhausting valve (19) disposed at the fuel gas exhausting pipe (18), and controllably exhausting and shutting off the fuel gas distributed through the fuel gas exhausting pipe (18), and

a voltage sensor (35) sensing a voltage of the fuel cell (1), wherein the controller (24) is adapted to implement the following sequential operations:

opening (S26, S64) the fuel gas exhausting valve (19),

the opening (S27, S65) of the fuel gas supplying valve (14),

the supplying of the fuel gas to the fuel electrode (2), and

closing (S29, S67) the fuel gas exhausting valve (19) when the voltage sensed with the voltage sensor (35) is more than or equal to a predetermined voltage.

9. A fuel cell system according to claim 4, 5 or 8, **characterized by** a fuel gas branched portion opening-closing valve (10) disposed at a fuel gas branched portion pipe (9) which links the fuel gas storing portion (8) with the fuel gas supplying pipe (7), and opening and shutting off the fuel gas branched portion pipe (9).

10. A fuel cell system according to claim 7, **characterized by** an oxidant gas branched portion opening-closing valve (28) disposed at an oxidant gas branched portion pipe (25) which links the oxidant gas storing portion (26) with the oxidant gas supplying pipe (21), and opening and shutting off the oxidant gas branched portion pipe (25).

11. A fuel cell system according to claim 7, **characterized by** a fuel gas branched portion opening-closing valve (10) disposed at a fuel gas branched portion pipe (9) which links the fuel gas storing portion (8) with the fuel gas supplying pipe (7), and opening and shutting off the fuel gas branched portion pipe (9), and an oxidant gas branched portion opening-closing valve (28) disposed at an oxidant gas branched portion pipe (25) which links the oxidant gas storing portion (26) with the oxidant gas supplying pipe (21), and opening and shutting off the oxidant gas branched portion pipe (25).

12. A fuel cell system according to claim 5 or 8, **characterized in that** the fuel gas exhausting pipe (18) is provided with a fuel processor (31) decreasing a concentration of the fuel gas which is unused and exhausted from the fuel cell (1).

13. A fuel cell system according to claim 8, **characterized in that** the predetermined voltage sensed with the voltage sensor (35) is 0.8 V.

14. A fuel cell system according to claim 12, **characterized in that** the concentration of the fuel gas processed with the fuel processor (31) is less than or equal to 4%.

15. A method of supplying a fuel gas in a fuel cell system including a fuel cell (1) including a fuel electrode (2) to which a fuel gas is supplied, and an oxidant electrode (3) to which an oxidant gas reacting with the fuel gas for a generating operation is supplied; the method comprising:

   supplying the fuel gas to the fuel electrode (2),**characterized by**
   calculating a first pressure Pin1 of the fuel gas and
   supplying an amount of fuel gas at a pressure equal to or higher than the
   calculated first pressure Pin1 before the fuel cell system is started for the
   generating operation, wherein the first pressure Pin1 is calculated by multiplying
   an allowable volume Vcell by a second pressure Pcell of the fuel gas in the fuel electrode (2), according to the
   following formula:

$$\text{Formula 1: } Pin1 \times Vin > Pcell \times Vcell,$$

   wherein Vin is a predetermined volume,
   the allowable volume Vcell is an addition of at least the following volumes:

   a volume of a flow channel (36A) formed in a separator (36) in the fuel cell (1) and a volume inside a fuel manifold
   (37) connected to the fuel cell

**Patentansprüche**

1. Brennstoffzellensystem, aufweisend:

   eine Brennstoffzelle (1), enthaltend eine Brennstoffelektrode (2), zu der ein Brenngas zugeführt wird, und eine
   Oxidationsmittelelektrode (3), zu der ein Oxidationsmittelgas für einen erzeugenden Betrieb zugeführt wird;
   einen Brenngaszuführer (7, 8, 14) zum Zuführen des Brenngases zu der Brennstoffelektrode (2);
   und eine Steuerung (24), **dadurch gekennzeichnet, dass**
   die Steuerung (24) vorgesehen ist, einen ersten Druck Pin1 des Brenngases zu berechnen und den Brenngaszuführer zu steuern, um eine Brenngasmenge mit einem Druck gleich zu oder höher als der berechnete erste
   Druck Pin1 zuzuführen, bevor das Brennstoffzellensystem für den erzeugenden Betrieb gestartet wird, wobei der erste Druck Pin1 durch Multiplizieren eines zulässigen Volumens Vcell mit einem zweiten Druck Pcell des Brenngases in der Brennstoffelektrode (2) entsprechend der folgenden Formel berechnet wird:

$$\text{Formel 1 : Pin1 x Vin > Pcell x Vcell,}$$

wobei Vin ein vorbestimmtes Volumen ist,
das zulässige Volumen Vcell eine Hinzufügung von zumindest der folgenden Volumina ist:

ein Volumen eines Strömungskanals (36A), gebildet in einem Separator (36) in der Brennstoffzelle (1), und ein Volumens innerhalb eines Brennstoffverteilers (37), verbunden mit der Brennstoffzelle (1).

2. Brennstoffzellensystem nach Anspruch 1, **dadurch gekennzeichnet, dass** das vorbestimmte Volumen Vin gleich ist dem Volumen eines Raumes zwischen einem Brenngaszuführungsmengen- Einstellventil (6) und einem Brenngas- Zuführungsventil (14).

3. Brennstoffzellensystem nach Anspruch 1 oder 2, **dadurch gekennzeichnet, dass** das zulässige Volumen Vcell außerdem um ein Volumen eines Rohrabschnittes erhöht wird, der durch einen Einlass der Brennstoffelektrode (2), des Brenngas- Zuführungsventiles (14) des Brenngaszuführers (7, 8, 14) und eines Brenngas- Zirkulationsabschnitt-Öffnungs- Schließ- Ventiles (16) umgeben ist.

4. Brennstoffzellensystem nach Anspruch 3, **dadurch gekennzeichnet, dass** der Brenngaszuführer (7, 8, 14) enthält:

das Brenngas- Zuführungsrohr (7), das das Brenngas zu der Brennstoffelektrode (2) aus einem Brenngasreservoir (4), das darin das Brenngas vorrätig hat, zuführt, das Brenngas- Zuführungsventil (14), angeordnet an dem Brenngas- Zuführungsrohr (7), und das steuerbar das Brenngas, verteilt durch das Brenngas- Zuführungsrohr (7) zu der Brennstoffelektrode (2), zuführt oder absperrt und
einen Brenngas- Speicherabschnitt (8), der mit dem Brenngas- Zuführungsrohr (7) auf einer stromaufwärtigen Seite im Verhältnis zu dem Brenngas- Zuführungsventil (14) verbunden ist, und der in der Lage ist, das Brenngas, zugeführt aus dem Brenngasreservoir (4), zu speichern, bis das so zugeführte Brenngas den ersten vorbestimmten Druck Pin1 hat, und
wobei die Steuerung (24) vorgesehen ist, die folgenden aufeinanderfolgenden Vorgänge zu implementieren, bevor das Brennstoffzellensystem für den erzeugenden Betrieb gestartet wird:

Speichern (S22, SS62) des Brenngases, das den ersten vorbestimmten Druck Pin1 hat, in dem Brenngas-Speicherabschnitt (8),
Öffnen (S27, S65) des Brenngas- Zuführungsventiles (14) und
Zuführen des Brenngases, das in dem Brenngas- Speicherabschnitt (8) gespeichert ist, zu der Brennstoffelektrode.

5. Brennstoffzellensystem nach Anspruch 4, **gekennzeichnet durch** ein Brenngas-Auslassrohr (18), das herausführt und das Brenngas ausströmt, das nicht verwendet ist und von der Brennstoffelektrode (2) ausgeströmt wird, und ein Brenngas- Auslassventil (19), angeordnet an dem Brenngas- Auslassrohr (18), und das das steuerbar das Brenngas, verteilt **durch** das Brenngas- Auslassrohr (18), ausströmt oder absperrt, wobei die Steuerung (24) vorgesehen ist, die folgenden aufeinanderfolgenden Vorgänge zu implementieren:

Öffnen (S26, S64) des Brenngas- Auslassventils (19),
das Öffnen (S27, S65) des Brenngas- Zuführungsventiles (14),
das Zuführen des Brenngases zu der Brennstoffelektrode (2) und
Schließen (S29, S67) des Brenngas- Auslassventiles (19), wenn ein Druck (Pf) des Brenngases, gespeichert in dem Brenngas- Speicherabschnitt (8) auf weniger als oder gleich zu einem zweiten vorbestimmten Druck Pin2 vermindert wird.

6. Brennstoffzellensystem nach Anspruch 5, **dadurch gekennzeichnet, dass** der zweite vorbestimmte Druck Pin2 zum Schließen des Brenngas- Auslassventiles (19) auf einen Wert festgelegt wird, der zumindest der folgenden Formel 2 genügt:

## Formel 2: (Pin1 – Pin2) x Vin > Pcell x Vcell

**7.** Brennstoffzellensystem nach Anspruch 4 oder 5, **gekennzeichnet durch** einen Oxidationsmittelgas- Zuführer (21, 26, 29), der das Oxidationsmittelgas in die Oxidationsmittelgas- Elektrode (3) zuführt bevor das Brennstoffzellensystem für den erzeugenden Betrieb gestartet wird, wobei der Oxidationsmittelgas- Zuführer (21, 26, 29) enthält:

ein Oxidationsmittelgas- Zuführungsrohr (21), das das Oxidationsmittelgas zu der Oxidationsmittelgas- Elektrode (3) zuführt,
ein Oxidationsmittelgas- Zuführungsventil (29), angeordnet in dem Oxidationsmittelgas- Zuführungsrohr (21), und das steuerbar das Oxidationsmittelgas, verteilt durch das Oxidationsmittelgas- Zuführungsrohr (21) zu der Oxidationsmittelgas-Elektrode (3), zuführt oder absperrt und einen Oxidationsmittelgas- Speicherabschnitt (26), der auf einer strom- aufwärtigen Seite im Verhältnis zu dem Oxidationsmittelgas- Zuführungsventil (29) mit dem Oxidationsmittelgas- Zuführungsrohr (21) verbunden ist, und in der Lage ist, das Oxidationsmittelgas zu speichern, bis das Oxidationsmittelgas einen dritten vorbestimmten Druck (Pin3) hat, der im Wesentlichen gleich zu einem Druck (Pf) des in dem Brenngas- Speicherabschnitt (8) gespeicherten Gases ist, wobei die Steuerung (24) vorgesehen ist, die folgenden aufeinanderfolgenden Vorgänge zu implementieren:

Speichern des Brenngases, das den ersten vorbestimmten Druck (Pin1) hat, in dem Brenngas- Speicherabschnitt (8),
im Wesentlichen gleichzeitiges Öffnen des Brenngas- Zuführungsventiles (14) und des Oxidationsmittelgas- Zuführungsventiles (29), wenn der Druck (Pf) des in dem Brenngas- Speicherabschnitt (8) gespeicherten Brenngases und ein Druck (Po) des Oxidationsmittelgases, gespeichert in dem Oxidationsmittelgas- Speicherabschnitt (26) einen Differenzdruck verursachen, der geringer als oder gleich zu einem vorbestimmten Differentialdruck ist, und
Zuführen des Brenngases zu der Brennstoffelektrode (2), während das Oxidationsmittelgas zu der Oxidationsmittelelelektrode (3) zugeführt wird.

**8.** Brennstoffzellensystem nach Anspruch 4 oder 7, **gekennzeichnet durch** ein Brenngas- Auslassrohr (18), das herausführt und das Brenngas, das nicht verwendet wird und von der Brennstoffelektrode (2) ausgeströmt wird, ausströmt,
ein Brenngas- Auslassventil (19), angeordnet an dem Brenngas- Auslassrohr (18) und das steuerbar das Brenngas, verteilt **durch** das Brenngas- Auslassrohr (18), ausströmt oder absperrt und
einen Spannungssensor (35), der eine Spannung der Brennstoffzelle (1) erfasst, wobei die Steuerung (24) vorgesehen ist, die aufeinanderfolgenden Vorgänge zu implementieren:

Öffnen (S26, S64) des Brenngas- Auslassventiles (19),
das Öffnen (S27, S65) des Brenngas- Zuführungsventiles (14),
das Zuführen des Brenngases zu der Brennstoffelektrode (2) und
Schließen (S29, S67) des Brenngas- Auslassventiles (19), wenn die Spannung, gemessen mit dem Spannungssensor (35), größer als oder gleich zu einer vorbestimmten Spannung ist.

**9.** Brennstoffzellensystem nach Anspruch 4, 5 oder 8, **gekennzeichnet durch** ein Brenngas- Abzweigabschnitt- Öffnungs- Schließ- Ventil (10), angeordnet an einem Brenngas-Abzweigrohrabschnitt (9), das den Brenngas- Speicherabschnitt (8) mit dem Brenngas- Zuführungsrohr (7) verbindet und den Brenngas- Abzweigrohrabschnitt (9) öffnet oder schließt.

**10.** Brennstoffzellensystem nach Anspruch 7, **gekennzeichnet durch** ein Oxidationsmittelgas- Abzweigabschnitt- Öffnungs- Schließ- Ventil (28), angeordnet an einem Oxidationsmittelgas- Abzweigabschnittsrohr (25), das den Oxidationsmittelgas- Speicherabschnitt (26) mit dem Oxidationsmittelgas- Zuführungsrohr (21) verbindet und das Oxidationsmittelgas- Abzweigabschnittsrohr (25) öffnet oder schließt.

**11.** Brennstoffzellensystem nach Anspruch 7, **gekennzeichnet durch** ein Brenngas-Abzweigabschnitt- Öffnungs-Schließ- Ventil (10), angeordnet an einem Brenngas- Abzweigabschnittsrohr (9), das den Brenngas- Speicherabschnitt (8) mit dem Brenngas- Zuführungsrohr (7) verbindet und das Brenngas- Abzweigabschnittsrohr (9) öffnet oder schließt und ein Oxidationsmittelgas- Abzweig- Abschnitts- Öffnungs- Schließ- Ventil (28), angeordnet an einem Oxidationsmittelgas- Abzweigsabschnittsrohr (25), das den Oxidationsmittelgas- Speicherabschnitt (26) mit dem Oxidationsmittelgas- Zuführungsrohr (21) verbindet und das Oxidationsmittelgas- Abzweigsabschnittsrohr (25) öffnet oder schließt.

**12.** Brennstoffzellensystem nach Anspruch 5 oder 8, **dadurch gekennzeichnet, dass** das Brenngas- Auslassrohr (18) mit einem Brennstoffprozessor (31) versehen ist, der eine Konzentration des Brenngases, das nicht verwendet und von der Brennstoffzelle (1) ausgeströmt wird, vermindert.

**13.** Brennstoffzellensystem nach Anspruch 8, **dadurch gekennzeichnet, dass** die vorbestimmte Spannung, erfasst mit dem Spannungssensor (35), 0,8 V beträgt.

**14.** Brennstoffzellensystem nach Anspruch 12, **dadurch gekennzeichnet, dass** die Konzentration des Brenngases, verarbeitet mit dem Brennstoffprozessor (31), geringer als oder gleich zu 4% ist.

**15.** Verfahren zum Zuführen eines Brenngases in einem Brennstoffzellensystem, enthaltend eine Brennstoffelektrode (2), zu der ein Brenngas zugeführt wird, und eine Oxidationsmittelelektrode (3), zu der ein Oxidationsmittelgas, das mit dem Brenngas reagiert, für einen erzeugenden Betrieb zugeführt wird; wobei das Verfahren aufweist:

Zuführen des Brenngases zu der Brennstoffelektrode (2), **gekennzeichnet durch** Berechnen eines ersten Druckes Pin1 des Brenngases und
Zuführen einer Brenngasmenge bei einem Druck gleich zu oder höher als der berechnete erste Druck Pin1 bevor das Brennstoffzellensystem für den erzeugenden Betrieb gestartet wird, wobei der erste Druck Pin1 berechnet wird **durch** Multiplizieren eines zulässigen Volumens Vcell mit einem zweiten Druck Pcell des Brenngases in der Brennstoffelektrode (2) entsprechend der folgenden Formel:

$$\text{Formel 1}: \text{Pin1} \times \text{Vin} > \text{Pcell} \times \text{Vcell}$$

wobei Vin ein vorbestimmtes Volumen ist,
das zulässige Volumen Vcell eine Hinzufügung von zumindest der folgenden Volumina ist:

ein Volumen eines Strömungskanals (36A), gebildet in einem Separator (36) in der Brennstoffzelle (1), und ein Volumens innerhalb eines Brennstoffverteilers (37), verbunden mit der Brennstoffzelle (1).

**Revendications**

**1.** Système de pile à combustible, comprenant :

une pile à combustible (1) comprenant une électrode de combustible (2) à laquelle un combustible gazeux est délivré, et une électrode d'oxydant (3) à laquelle un gaz oxydant réagissant avec le combustible gazeux pour une opération de génération est délivré ;
un dispositif d'alimentation en combustible gazeux (7, 8, 14) pour délivrer le combustible gazeux à l'électrode de combustible (2) ; et
un contrôleur (24), **caractérisé en ce que**
le contrôleur (24) est adapté pour calculer une première pression Pin1 du combustible gazeux et pour commander le dispositif d'alimentation en combustible gazeux pour qu'il délivre une quantité de combustible gazeux à une pression égale ou supérieure à la première pression Pin1 calculée avant que le système de pile à combustible ne soit démarré pour l'opération de génération, dans lequel la première pression Pin1 est calculée en multipliant un volume Vcell autorisé par une deuxième pression Pcell du combustible gazeux dans l'électrode de combustible (2), selon la formule suivante :

$$\text{formule 1}: \text{Pin1} \times \text{Vin} > \text{Pcell} \times \text{Vcell},$$

dans laquelle Vin est un volume prédéterminé,
le volume Vcell autorisé est une addition d'au moins les volumes suivants :

un volume d'un canal d'écoulement (36A) formé dans un séparateur (36) dans la pile à combustible (1) et un volume à l'intérieur d'un collecteur de combustible (37) connecté à la pile à combustible (1).

2. Système de pile à combustible selon la revendication 1, **caractérisé en ce que** le volume Vin prédéterminé est égal au volume d'un espace entre une soupape d'ajustement de quantité d'alimentation en combustible gazeux (6) et une soupape d'alimentation en combustible gazeux (14).

3. Système de pile à combustible selon la revendication 1 ou 2, **caractérisé en ce que** le volume Vcell autorisé est en outre complété par un volume d'une partie de tuyau qui est entourée par un orifice d'entrée de l'électrode de combustible (2), la soupape d'alimentation en combustible gazeux (14) du dispositif d'alimentation en combustible gazeux (7, 8, 14), et la soupape d'ouverture-fermeture de partie de circulation de combustible gazeux (16).

4. Système de pile à combustible selon la revendication 3, **caractérisé en ce que** le dispositif d'alimentation en combustible gazeux (7, 8, 14) comprend :

le tuyau d'alimentation en combustible gazeux (7) délivrant à l'électrode de combustible (2) le combustible gazeux provenant d'un réservoir de combustible gazeux (4) qui conserve dans celui-ci le combustible gazeux, la soupape d'alimentation en combustible gazeux (14) disposée au niveau du tuyau d'alimentation en combustible gazeux (7), et débutant et interrompant de manière contrôlable la distribution du combustible gazeux distribué par l'intermédiaire du tuyau d'alimentation en combustible gazeux (7) à l'électrode de combustible (2), et une partie de stockage de combustible gazeux (8) reliée au tuyau d'alimentation en combustible gazeux (7) d'un côté amont par rapport à la soupape d'alimentation en combustible gazeux (14), et capable de stocker le combustible gazeux sorti du réservoir de combustible gazeux (4) jusqu'à ce que le combustible gazeux ainsi sorti soit à la première pression Pin1 prédéterminée, et

dans lequel le contrôleur (24) est adapté pour effectuer les opérations séquentielles suivantes avant que le système de pile à combustible ne soit démarré pour l'opération de génération :

stocker (S22, S62) dans la partie de stockage de combustible gazeux (8) le combustible gazeux ayant la première pression Pin1 prédéterminée,
ouvrir (S27, S65) la soupape d'alimentation en combustible gazeux (14), et
alimenter l'électrode de combustible (2) en combustible gazeux stocké dans la partie de stockage de combustible gazeux (8).

5. Système de pile à combustible selon la revendication 4, **caractérisé par** un tuyau d'évacuation de combustible gazeux (18) sortant et évacuant le combustible gazeux qui n'est pas utilisé et qui est évacué de l'électrode de combustible (2), et
une soupape d'évacuation de combustible gazeux (19) disposée au niveau du tuyau d'évacuation de combustible gazeux (18), et débutant et interrompant l'évacuation de manière contrôlable du combustible gazeux distribué par l'intermédiaire du tuyau d'évacuation de combustible gazeux (18), dans lequel le contrôleur (24) est adapté pour effectuer les opérations séquentielles suivantes :

ouvrir (S26, S64) la soupape d'évacuation de combustible gazeux (19),
ouvrir (S27, S65) la soupape d'alimentation en combustible gazeux (14),
alimenter en combustible gazeux l'électrode de combustible (2), et
fermer (S29, S67) la soupape d'évacuation de combustible gazeux (19) lorsque la pression (Pf) du combustible gazeux stocké dans la partie de stockage de combustible gazeux (8) a diminué à une valeur inférieure ou égale à une deuxième pression Pin2 prédéterminée.

6. Système de pile à combustible selon la revendication 5, **caractérisé en ce que** la deuxième pression Pin2 prédéterminée pour fermer la soupape d'évacuation de combustible gazeux (19) est fixée à une valeur satisfaisant au moins la formule 2 suivante :

$$\text{formule 2 : } (Pin1 - Pin2) \times Vin > Pcell \times Vcell$$

7. Système de pile à combustible selon la revendication 4 ou 5, **caractérisé par** un dispositif d'alimentation en gaz oxydant (21, 26, 29) délivrant le gaz oxydant dans l'électrode d'oxydant (3) avant que le système de pile à combustible ne soit démarré pour l'opération de génération, le dispositif d'alimentation en gaz oxydant (21, 26, 29) comprenant :

un tuyau d'alimentation en gaz oxydant (21) alimentant l'électrode d'oxydant (3) en gaz oxydant, une soupape d'alimentation en gaz oxydant (29) disposée au niveau du tuyau d'alimentation en gaz oxydant (21), et débutant et interrompant de manière contrôlable la distribution du gaz oxydant distribué par l'intermédiaire du tuyau d'alimentation en gaz oxydant (21) à l'électrode d'oxydant (3), et une partie de stockage de gaz oxydant (26) reliée au tuyau d'alimentation en gaz oxydant (21) d'un côté amont par rapport à la soupape d'alimentation en gaz oxydant (29), et capable de stocker le gaz oxydant jusqu'à ce que le gaz oxydant soit à une troisième pression (Pin3) prédéterminée qui est sensiblement égale à une pression (Pf) du combustible gazeux stocké dans la partie de stockage de combustible gazeux (8), dans lequel le contrôleur (24) est adapté pour effectuer les opérations séquentielles suivantes :

stocker dans la partie de stockage de combustible gazeux (8) le combustible gazeux ayant la première pression (Pin1) prédéterminée, ouvrir la soupape d'alimentation en combustible gazeux (14) et la soupape d'alimentation en gaz oxydant (29) sensiblement simultanément, lorsque la pression (Pf) du combustible gazeux stocké dans la partie de stockage de combustible gazeux (8) et la pression (Po) du gaz oxydant stocké dans la partie de stockage de gaz oxydant (26) créent une pression différentielle inférieure ou égale à une pression différentielle prédéterminée, et alimenter en combustible gazeux l'électrode de combustible (2) tout en délivrant le gaz oxydant à l'électrode d'oxydant (3).

**8.** Système de pile à combustible selon la revendication 4 ou 7, **caractérisé par** un tuyau d'évacuation de combustible gazeux (18) qui sort et évacue le combustible gazeux qui n'est pas utilisé et qui est évacué de l'électrode de combustible (2), une soupape d'évacuation de combustible gazeux (19) disposée au niveau du tuyau d'évacuation de combustible gazeux (18), et débutant et interrompant de manière contrôlable l'évacuation du combustible gazeux distribué par l'intermédiaire du tuyau d'évacuation de combustible gazeux (18), et un capteur de tension (35) détectant une tension de la pile à combustible (1), dans lequel le contrôleur (24) est adapté pour effectuer les opérations séquentielles suivantes :

ouvrir (S26, S64) la soupape d'évacuation de combustible gazeux (19), ouvrir (S27, S65) la soupape d'alimentation en combustible gazeux (14), alimenter en combustible gazeux l'électrode de combustible (2), et fermer (S29, S67) la soupape d'évacuation de combustible gazeux (19) lorsque la tension détectée par le capteur de tension (35) est supérieure ou égale à une tension prédéterminée.

**9.** Système de pile à combustible selon la revendication 4, 5 ou 8, **caractérisé par** une soupape d'ouverture-fermeture de partie dérivée de combustible gazeux (10) disposée au niveau d'un tuyau de partie dérivée de combustible gazeux (9) qui relie la partie de stockage de combustible gazeux (8) au tuyau d'alimentation en combustible gazeux (7), et ouvrant et fermant le tuyau de partie dérivée de combustible gazeux (9).

**10.** Système de pile à combustible selon la revendication 7, **caractérisé par** une soupape d'ouverture-fermeture de partie dérivée de gaz oxydant (28) disposée au niveau du tuyau de partie dérivée de gaz oxydant (25) qui relie la partie de stockage de gaz oxydant (26) au tuyau d'alimentation en gaz oxydant (21), et ouvrant et fermant le tuyau de partie dérivée de gaz oxydant (25).

**11.** Système de pile à combustible selon la revendication 7, **caractérisé par** une soupape d'ouverture-fermeture de partie dérivée de combustible gazeux (10) disposée au niveau d'un tuyau de partie dérivée de combustible gazeux (9) qui relie la partie de stockage de combustible gazeux (8) au tuyau d'alimentation en combustible gazeux (7), et ouvrant et fermant le tuyau de partie dérivée de combustible gazeux (9), et une soupape d'ouverture-fermeture de partie dérivée de gaz oxydant (28) disposée au niveau d'un tuyau de partie dérivée de gaz oxydant (25) qui relie la partie de stockage de gaz oxydant (26) au tuyau d'alimentation en gaz oxydant (21), et ouvrant et fermant le tuyau de partie dérivée de gaz oxydant (25).

**12.** Système de pile à combustible selon la revendication 5 ou 8, **caractérisé en ce que** le tuyau d'évacuation de combustible gazeux (18) est pourvu d'un dispositif de traitement de combustible (31) diminuant la concentration en combustible gazeux qui n'est pas utilisé et qui est évacué de la pile à combustible (1).

**13.** Système de pile à combustible selon la revendication 8, **caractérisé en ce que** la tension prédéterminée détectée par le capteur de tension (35) est égale à 0,8 V.

**14.** Système de pile à combustible selon la revendication 12, **caractérisé en ce que** la concentration en combustible gazeux traité par le dispositif de traitement de combustible (31) est inférieure ou égale à 4 %.

**15.** Procédé de distribution d'un combustible gazeux dans un système de pile à combustible comprenant une pile à combustible (1) comprenant une électrode de combustible (2) à laquelle un combustible gazeux est délivré, et une électrode d'oxydant (3) à laquelle un gaz oxydant réagissant avec le combustible gazeux pour une opération de génération est délivré ; le procédé consistant à :

alimenter en combustible gazeux l'électrode de combustible (2), **caractérisé** les étapes consistant à :

calculer une première pression Pin1 du combustible gazeux ; et
délivrer une quantité de combustible gazeux à une pression égale ou supérieure à la première pression Pin1 calculée avant que le système de pile à combustible ne soit démarré pour l'opération de génération, dans lequel la première pression Pin1 est calculée en multipliant un volume Vcell autorisé par une deuxième pression Pcell du combustible gazeux dans l'électrode de combustible (2), selon la formule suivante :

$$\text{formule 1 : Pin1 x Vin > Pcell x Vcell,}$$

dans laquelle Vin est un volume prédéterminé,
le volume Vcell autorisé est l'addition d'au moins les volumes suivants :

un volume d'un canal d'écoulement (36A) formé dans un séparateur (36) dans la pile à combustible (1) et un volume à l'intérieur d'un collecteur de combustible (37) relié à la pile à combustible.

## FIG. 1

EP 1 635 414 B1

# FIG. 2

```
        ( START PREPARATION )
                 │
                 ▼
┌─────────────────────────────────┐
│ CLOSE FUEL GAS SUPPLYING VALVE 14 WHILE │ ──╮── S21
│ OPENING FUEL GAS BRANCHED PORTION │
│ OPENING-CLOSING VALVE 10 │
└─────────────────────────────────┘
                 │
                 ▼
┌─────────────────────────────────┐
│ START SUPPLYING FUEL GAS TO │ ──╮── S22
│ FUEL GAS STORING PORTION 8 │
└─────────────────────────────────┘
                 │
                 ▼
┌─────────────────────────────────┐
│ SENSE PRESSURE PF OF FUEL GAS │ ◄── ╮── S23
└─────────────────────────────────┘       │
                 │      S24                │
                 ▼                         │
              ╱       ╲        NO          │
           ╱   Pf ≥ Pin1  ╲ ───────────────┘
              ╲       ╱
                 │ YES
                 ▼
┌─────────────────────────────────┐
│ STOP SUPPLYING FUEL GUS TO │ ──╮── S25
│ FUEL GAS STORING PORTION 8 │
└─────────────────────────────────┘
                 │
                 ▼
┌─────────────────────────────────┐
│ CLOSE FUEL GAS CIRCULATING PORTION │ ──╮── S26
│ OPENING-CLOSING VALVE 16 WHILE │
│ OPENING FUEL GAS EXHAUSTING VALVE 19 │
└─────────────────────────────────┘
                 │
                 ▼
┌─────────────────────────────────┐
│ MOMENTARILY OPEN FUEL GAS │ ──╮── S27
│ SUPPLYING VALVE 14 │
└─────────────────────────────────┘
                 │
                 ▼
┌─────────────────────────────────┐
│ CLOSE FUEL GAS BRANCHED PORTION │ ──╮── S28
│ OPENING-CLOSING VALVE 10 │
└─────────────────────────────────┘
                 │
                 ▼
┌─────────────────────────────────┐
│ OPEN FUEL GAS CIRCULATING PORTION │ ──╮── S29
│ OPENING-CLOSING VALVE 16 WHILE │
│ CLOSING FUEL GAS EXHAUSTING VALVE 19 │
└─────────────────────────────────┘
                 │
                 ▼
        ( END PREPARATION )
```

# FIG. 3

EP 1 635 414 B1

# FIG. 4

```
( START PREPARATION )
          │
          ▼
┌─────────────────────────────────────┐
│ CLOSE FUEL GAS SUPPLYING VALVE 14 WHILE │ ⤳ S41
│ OPENING TWO FUEL GAS BYPASS PORTION     │
│ OPENING–CLOSING VALVES 12, 13           │
└─────────────────────────────────────┘
          │
          ▼
┌─────────────────────────────────────┐
│ START SUPPLYING FUEL GAS TO          │ ⤳ S22
│ FUEL GAS STORING PORTION 8           │
└─────────────────────────────────────┘
          │
          ▼
┌─────────────────────────────────────┐
│ SENSE PRESSURE Pf OF FUEL GAS        │ ◄─ S23
└─────────────────────────────────────┘
          │                                    │
          ▼           S24                      │
      ◇ Pf ≥ Pin1 ◇ ──── NO ──────────────────┘
          │
          │ YES
          ▼
┌─────────────────────────────────────┐
│ STOP SUPPLYING FUEL GUS TO           │ ⤳ S25
│ FUEL GAS STORING PORTION 8           │
└─────────────────────────────────────┘
          │
          ▼
┌─────────────────────────────────────┐
│ CLOSE FUEL GAS CIRCULATING PORTION   │ ⤳ S26
│ OPENING–CLOSING VALVE 16 WHILE       │
│ OPENING FUEL GAS EXHAUSTING VALVE 19 │
└─────────────────────────────────────┘
          │
          ▼
┌─────────────────────────────────────┐
│ MOMENTARILY OPEN FUEL GAS            │ ⤳ S27
│ SUPPLYING VALVE 14                   │
└─────────────────────────────────────┘
          │
          ▼
┌─────────────────────────────────────┐
│ CLOSE TWO FUEL GAS BYPASS PORTION    │ ⤳ S48
│ OPENING–CLOSING VALVES 12, 13        │
└─────────────────────────────────────┘
          │
          ▼
┌─────────────────────────────────────┐
│ OPEN FUEL GAS CIRCULATING PORTION    │ ⤳ S29
│ OPENING–CLOSING VALVE 16 WHILE       │
│ CLOSING FUEL GAS EXHAUSTING VALVE 19 │
└─────────────────────────────────────┘
          │
          ▼
  ( END PREPARATION )
```

# FIG. 5

# FIG. 6

```
( START PREPARATION )
           │
           ▼
┌──────────────────────────────────────────┐
│ CLOSE FUEL GAS SUPPLYING VALVE 14 WHILE   │      S61
│ FULLY OPENING FUEL GAS SUPPLY QUANTITY    │
│ ADJUSTING VALVE 6                         │
└──────────────────────────────────────────┘
           │
           ▼
┌──────────────────────────────────────────┐
│ SET PRESSURE OF  DISTRIBUTED FUEL GAS     │
│ WITH FUEL GAS PRESSURE ADJUSTING VALVE 5  │      S62
│ (TARGET VALUE: PREDETERMINED PRESSURE FOR │
│ START)                                    │
└──────────────────────────────────────────┘
           │
           ▼
┌──────────────────────────────────────────┐
│ FULLY CLOSE FUEL GAS SUPPLY QUANTITY      │      S63
│ ADJUSTING VALVE 6                         │
└──────────────────────────────────────────┘
           │
           ▼
┌──────────────────────────────────────────┐
│ CLOSE FUEL GAS CIRCULATING PORTION        │
│ OPENING-CLOSING VALVE 16 WHILE            │      S64
│ OPENING FUEL GAS EXHAUSTING VALVE 19      │
└──────────────────────────────────────────┘
           │
           ▼
┌──────────────────────────────────────────┐
│ OPEN FUEL GAS SUPPLYING VALVE 14          │      S65
└──────────────────────────────────────────┘
           │
           ▼
┌──────────────────────────────────────────┐
│ SET PRESSURE OF DISTRIBUTED FUEL GAS WITH │
│ FUEL GAS PRESSURE ADJUSTING VALVE 5       │      S66
│ (TARGET VALUE: PREDETERMINED PRESSURE FOR │
│ ORDINARY OPERATION)                       │
└──────────────────────────────────────────┘
           │
           ▼
┌──────────────────────────────────────────┐
│ OPEN FUEL GAS CIRCULATING PORTION         │
│ OPENING-CLOSING VALVE 16 WHILE CLOSING    │      S67
│ FUEL GAS EXHAUSTING VALVE 19              │
└──────────────────────────────────────────┘
           │
           ▼
   ( END PREPARATION )
```

**FIG.7**

**EP 1 635 414 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP P2004139984 A
- US 20030134165 A1